# EUROPÄISCHE PATENTSCHRIFT

(11) **EP 1 979 213 B1**
(45) Veröffentlichungstag und Bekanntmachung des Hinweises auf die Patenterteilung: **09.06.2010**
(21) Anmeldenummer: 07704005.3
(22) Anmeldetag: 19.01.2007
(51) Int. Cl.: B60T 13/52

(54) **UNTERDRUCKBREMSKRAFTVERSTÄRKER UND VERFAHREN ZU DESSEN BETRIEB**
VACUUM BRAKE BOOSTER AND METHOD FOR THE OPERATION THEREOF
AMPLIFICATEUR DE FORCE DE FREINAGE BASSE PRESSION, ET PROCÉDÉ POUR LE FAIRE FONCTIONNER

(30) Priorität: 20.01.2006 DE 102006003059; 19.01.2007 DE 102007003741
(43) Veröffentlichungstag der Anmeldung: 15.10.2008
(73) Patentinhaber: Continental Teves AG & Co. oHG, 60488 Frankfurt (DE)
(72) Erfinder: SCHUBERT, Peter, 65187 Wiesbaden (DE); MERZOUG, Patrick, 65795 Hattersheim (DE); ZAMBOU, Nathan, 65193 Wiesbaden (DE); MAGEL, Guntjof, 65428 Rüsselsheim (DE); GRONAU, Ralph, 35083 Wetter (DE)
(86) Internationale Anmeldenummer: PCT/EP2007/050535
(87) Internationale Veröffentlichungsnummer: WO 2007/082932

(56) Entgegenhaltungen:
- EP-A1- 0 850 815
- WO-A-02/34601
- WO-A-03/024760
- WO-A-2006/092348
- FR-A1- 2 618 744

## Beschreibung

Die vorliegende Erfindung betrifft ein Verfahren zum Betrieb eines Unterdruckbremskraftverstärkers einer Fahrzeugbremsanlage und einen Unterdruckbremskraftverstärker nach dem Oberbegriff des Anspruchs 1 oder 6.

Zur Unterstützung der vom Fahrer ausgeübten Bremskraft am Bremspedal werden Unterdruckbremskraftverstärker eingesetzt. Der Unterdruckbremskraftverstärker besteht aus mindestens zwei Kammer, die eine Druckdifferenz aufweisen. Diese Kammern sind die Arbeitskammer und die Unterdruckkammer, welche in der Bremsanlage so integriert werden, dass die Arbeitskammer mit der Atmosphäre verbunden wird. Die Unterdruckkammer wird mit Hilfe einer Unterdruckversorgung entlüftet. Beide Kammern sind durch eine Membrane getrennt. Der vom Verbrennungsmotor oder einer Vakuumpumpe zur Verfügung gestellte Unterdruck unterstützt die vom Fahrer aufzubringende Pedalkraft. Abhängig vom verfügbaren Unterdruck wird bei bestimmten Pedalkräften ein Zustand erreicht, bei dem eine weitere Erhöhung der Kraft auf die Betätigungseinheit nur durch eine Steigerung der Pedalkraft möglich ist, da der Unterdruckbremskraftverstärker die maximal mögliche Unterstützungskraft erreicht hat. Diesen Zustand bezeichnet man als Aussteuerpunkt des Unterdruckbremskraftverstärkers.

Aus der WO 2006/092348 A1 und der FR-A1 2618744 ist ein Verfahren zum Erkennen des Aussteuerpunktes eines Unterdruckbremskraftverstärkers bekannt. Bei dem vorbekannten Verfahren wird der in der Unterdruckkammer herrschende Druck mittels eines Drucksensors gemessen und der Aussteuerpunkt mit Hilfe einer mathematischen Funktion allein auf Grundlage des in der Unterdruckkammer herrschenden Drucks berechnet. Dabei ist nach dem vorbekannten Verfahren beabsichtigt, dass der Aussteuerpunkt detektiert wird, wenn das Drucksignal des Drucksensors ein Minimum aufweist. Auf die Frage, ob das Signal des einzelnen Drucksensors abgesichert oder zuverlässig ist, wird nicht eingegangen. Dies ist aus der gattungsgemäßen WO 2002/34601 bekannt, in der eine Plausibilisierung des von der Sensoreinheit gemessenen Druckwerts anhand einer Differenzbildung und einer Monotonieprüfung erfolgt.

Die Aufgabe der vorliegenden Erfindung ist es daher, das gattungsgemäße Verfahren in der Weise zu verbessern, dass ein Betrieb eines Unterdruckbremskraftverstärkers mit lediglich einem Drucksensor zuverlässig und sicher erfolgt.

Diese Aufgabe wird verfahrensmäßig durch die Merkmale des unabhängigen Patentanspruchs 1 gelöst. Dabei ist vorgesehen, dass eine Plausibilisierung des von der Sensoreinheit gemessenen Druckwerts durchgeführt wird und mögliche Defekte der Sensoreinheit oder des Unterdruckbremskraftverstärkers ermittelt werden, wobei zur Plausibilisierung ein Modell gebildet wird, das auf Grundlage empirisch ermittelter Daten in Verbindung mit strömungstechnischen und thermodynamischen Vorgängen die Zustandsgrößen in der Unterdruckkammer und der Arbeitskammer schätzt.

Besonders vorteilhafte Weiterbildungen und Ausgestaltungen der Erfindung sind in den abhängigen Unteransprüchen angegeben.

Bei einer weiteren vorteilhaften Weiterbildung werden die geometrischen Abmessungen der Unterdruckkammer und der Arbeitskammer sowie Umgebungsbedingungen des Unterdruckbremskraftverstärkers in die Modellbildung einbezogen.

Dabei werden die Umgebungsbedingungen des Unterdruckbremskraftverstärkers durch den atmosphärischen Druck, den Druckwert der Unterdruckquelle, den hydraulischen Druck eines nachgeschalteten Hauptbremszylinders und der Umgebungstemperatur gebildet.

Eine besonders vorteilhafte Weiterbildung sieht vor, dass bei der Modellbildung sowohl statische als auch dynamische Betriebszustände des Unterdruckbremskraftverstärkers berücksichtigt werden.

Außerdem weist die elektronische Steuereinheit eine Ansteuerungseinheit auf, die eine aktive hydraulische Bremskraftunterstützungseinheit auf Grundlage der Auswertung der Druckwerte in der Unterdruckkammer ansteuert.

Die vorliegende Aufgabe wird auch durch eine Vorrichtung gelöst, bei der Mittel vorgesehen sind, die eine Plausibilisierung des von der Sensoreinheit gemessenen Druckwerts durchführen und mögliche Defekte der Sensoreinheit oder des Unterdruckbremskraftverstärkers ermitteln, wobei die Mittel ein Modell umfassen, das auf Grundlage empirisch ermittelter Daten in Verbindung mit strömungstechnischen und thermodynamischen Vorgängen die Zustandsgrößen in der Unterdruckkammer und der Arbeitskammer schätzt.

Die Erfindung wird eines Ausführungsbeispiels im Zusammenhang mit der beiliegenden Zeichnung näher erläutert. Es zeigen:
- Fig. 1: eine Schnittdarstellung eines Unterdruckbremskraftverstärkers,
- Fig. 2: eine Darstellung der Struktur nach Fig. 1,
- Fig. 3a: ein zeitliches Ablaufdiagramm des Ausgangssignals eines Drucksensors, der den Druck in der Unterdruckkammer ermittelt, über der Zeit,
- Fig. 3b: ein zeitliches Ablaufdiagramm des Drucksensorsignals aus Fig. 3a und des Ausgangssignals eines Drucksensors, der den hydraulischen Druck in einem Tandemhauptzylinder ermittelt,
- Fig. 4: eine Strukturelle Darstellung eines Schätzalgorithmus,
- Fig. 5: ein empirisch ermitteltes Kennfeld eines Unterdruckbremskraftverstärkers,
- Fig. 6a,b: ein der Darstellung in Fig. 3a entsprechendes zeitliches Ablaufdiagramm mit Parametervariation und
- Fig. 7a,b: ein der Darstellung in Fig. 3b entsprechendes zeitliches Ablaufdiagramm mit Parametervariation.

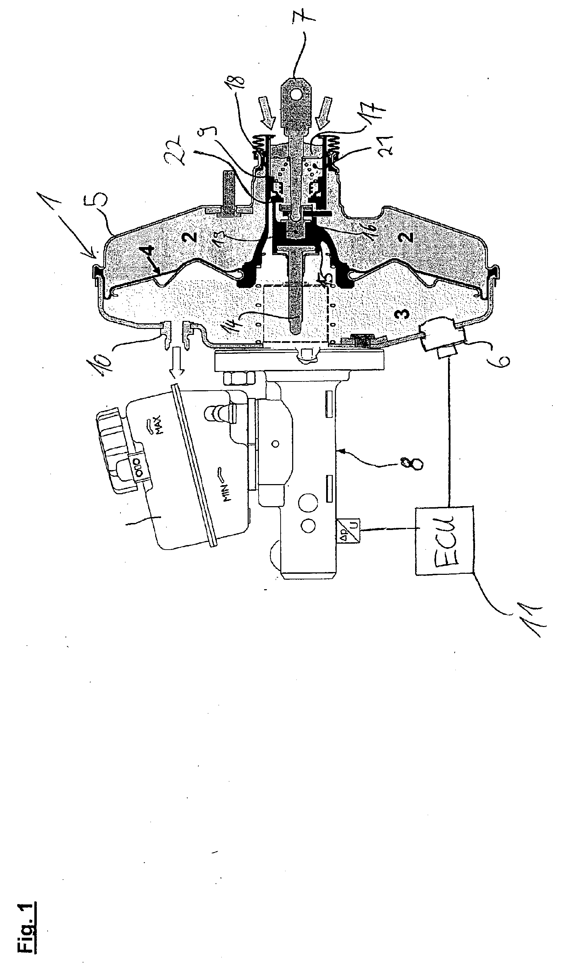

In Fig. 1 ist ein Unterdruckbremskraftverstärker 1 dargestellt, der auch als "Booster" bezeichnet wird. Der Unterdruckbremskraftverstärker 1 weist ein Gehäuse 5 auf, das in eine Arbeitskammer 2 und eine Unterdruckkammer 3 aufgeteilt ist. Dies erfolgt durch eine bewegliche Trennwand 4, die mit einer axial beweglichen Gummimembran versehen ist. Mittig im Unterdruckbremskraftverstärker 1 ist eine Steuernabe 9 angeordnet, deren Funktion nachfolgend näher erläutert wird. Die Kraftabgabe erfolgt über ein Kraftabgabeglied 14, das sich über eine Reaktionsscheibe 15 an einer Stufe 16 abstützt. Auf der anderen Seite durchragt die Steuernabe 9 das Gehäuse 5 und ist zur Atmosphäre über einen Filter 17 axial geöffnet. Mittels einer formschlüssig eingesetzten Dichtung 18 wird die Arbeitskammer 2 zur Umgebung abgedichtet.

Die Kraftübertragung auf die Reaktionsscheibe 15 erfolgt über einen Ventilkolben 19, der auf einen Kugelkopf einer Kolbenstange 7 aufgeklemmt ist. Die Kolbenstange 7 durchragt einen Luftraum 21 und steht mit einem nicht dargestellten Betätigungspedal in Verbindung. Im Luftrum 21 ist ein von der Kolbenstange 7 durchragtes Tellerventil 22 eingesetzt.

Das Tellerventil 22 ist so angeordnet, dass es den Luftraum 21 zum Verstärkerinneren abtrennt, wie es in der in Fig. 1 dargestellten Ruhestellung des Unterdruckbremskraftverstärkers 1 der Fall ist. In dieser Ruhestellung wird die Luftzufuhr zur Arbeitskammer 2 abgesperrt. Somit herrscht in der Arbeitskammer 2 ein Unterdruck, da die Arbeitskammer 2 über Öffnungen mit der Unterdruckkammer 3 verbunden ist und da die Unterdruckkammer 3 über einen Unterdruckanschluss 10 mit einer kontinuierlich arbeitenden, nicht dargestellten Unterdruckquelle oder Vakuumquelle verbunden ist. Diese Stellung entspricht einer Ruhestellung bzw. Lösestellung des Unterdruckbremskraftverstärkers.

Wie in Fig. 1 gezeigt ist, wird mit Hilfe einer Sensoreinheit 6 der Druck in der Unterdruckkammer 3 gemessen. Die Sensoreinheit 6 steht dazu über eine Öffnung mit der Unterdruckkammer 3 in Verbindung.

Wird ein mit der Kolbenstange 7 verbundenes Bremspedal betätigt und somit die Kolbenstange 7 und der Ventilkolben 19 verschoben, so wird das Tellerventil 22 betätigt und die Unterdruckkammer 3 und die Arbeitskammer 2 stehen nicht mehr miteinander in Verbindung. Im weiteren Verlauf der Bewegung wird eine Verbindung zwischen der Arbeitskammer 2 und der Außenluft durch das Tellerventil 22 geöffnet. Durch den an der beweglichen Trennwand 4 anliegende Druckunterschied wird die Eingangskraft am Bremspedal unterstützt und ein dem Unterdruckbremskraftverstärker 1 nachgeschalteter Hauptbremszylinder 8 mittels des Kraftabgabegliedes 14 betätigt. In dieser Bereitschaftsstellung bewirkt jede geringfügige Änderung der Pedalkraft eine Vergrößerung oder Verkleinerung der Druckdifferenz auf beiden Seiten der Trennwand 4 und bewirkt über den Hauptbremszylinder 8 eine Erhöhung oder Reduzierung des hydraulischen Drucks im Bremssystem und damit eine geregelte Abbremsung des Kraftfahrzeugs.

Die maximal mögliche Unterstützungskraft des Unterdruckbremskraftverstärkers 1 ist gegeben, wenn die Arbeitskammer 2 vollständig belüftet ist und in der Arbeitskammer 2 der Atmosphärendruck herrscht. In diesem Zustand ist der Aussteuerpunkt. Im Aussteuerpunkt ist also die maximale Druckdifferenz zwischen der Arbeitskammer und der Unterdruckkammer 3 erreicht. Eine weitere Erhöhung der Kraft auf den Hauptbremszylinderkolben, der sich an das Kraftabgabeglied 13 anschließt, ist nur durch eine noch größere Pedalkraft durch den Fahrer möglich. Bei einem weiteren Anstieg der Pedalkraft erhöht sich der hydraulische Druck im Bremssystem nur noch unverstärkt. Die führt dazu, dass nach dem Überschreiten des Aussteuerpunktes eine weitere Erhöhung der Bremskraft einen wesentlich erhöhten Kraftaufwand am Bremspedal erfordert.

Zur Behebung dieses Problems ist es bekannt, beim Erreichen des Aussteuerpunktes auf eine hydraulische Verstärkung umzuschalten und eine hydraulische Pumpe anzusteuern, die einen zusätzlichen Bremsdruck aufbaut. Für diese zusätzliche Bremskraftunterstützung ist es jedoch notwendig, den Aussteuerpunkt genau zu erkennen, um die zusätzliche hydraulische Verstärkung bedarfsgerecht zuzuschalten. Da der Unterdruckbremskraftverstärker 1 lediglich einen Drucksensor 6 zur Ermittlung des Drucks in der Unterdruckkammer aufweist, wird der Aussteuerpunkt geschätzt bzw. berechnet.

Auch mit lediglich einem Drucksensor 6 muss der Aussteuerpunkt zuverlässig erkannt werden. Insbesondere dürfen Defekte des Drucksensors nicht zu einer fehlerhaften Erkennung des Aussteuerpunktes führen. Daher wird bei dem vorliegenden Verfahren eine Plausibilisierung des von der Sensoreinheit 6 gemessenen Druckwerts durchgeführt und mögliche Defekte der Sensoreinheit 6 oder des Unterdruckbremskraftverstärkers 1 werden ermittelt, sodass Sensorfehler ermittelt werden und ein Ausfall des Unterdruckbremskraftverstärkers 1. erkannt wird.

Zu diesem Zweck ist eine Methode vorgesehen, welche auf der Grundlage von empirisch ermittelten Zusammenhängen, von "adaptiven" Kennfeldern, von strömungstechnischen und von thermodynamischen Vorgängen ein Modell des Gesamtsystems bildet und die Zustandsgrößen in den Kammern 2, 3 des Unterdruckbremskraftverstärkers 1 schätzt. Die Kenngrößen des Unterdruckbremskraftverstärkers 1 wie die geometrischen Abmessungen, die Volumina der Unterdruck- und der Arbeitskammer 2, 3 und eine Angabe über Umgebungszustände wie die Temperatur der Brennkraftmaschine des Kraftfahrzeugs, der Unterdruck im Ansaugtrakt bzw. im Unterdruckanschluss 10, der Atmosphärendruck und der Druck des Hauptbremszylinders 8 sind in der Modellbildung einbezogen.

Die Modellbildung und die Schätzung des Druckes in beiden Kammern 2, 3 des Unterdruckbremskraftverstärkers 1 ist nicht nur auf bestimmte Betätigungszustände des Bremskraftverstärkers 1, das heißt Betätigung des Bremspedals oder keine Betätigung des Bremspedals, eingeschränkt, sondern sie ist für alle Betriebzustände des Unterdruckbremskraftverstärkers 1 vorgesehen.

Die wesentlichen Komponenten des betrachteten Systems finden Eingang in die Modellbildung. Dies sind, wie in Fig. 1 dargestellt ist, die bewegliche Trennwand 1, die Arbeits- und die Unterdruckkammer 2, 3. Hinzu kommen die drei Ventile, die zwischen der Belüftungsseite, der Arbeitskammer 2, der Unterdruckkammer 3 und der Entlüftungsseite (Ansaugtrakt) eingebracht sind. Die Belüftungs- und Entlüftungsseite bilden die Systemgrenze. Die Verbindung zur Pedaleinheit über die Kolbenstange 7 befindet sich an der Belüftungsseite. Die Anschlüsse für den Hauptbremszylinder 8, den Drucksensor 6 und den Unterdruckanschluss 10 sind an der Entlüftungsseite zu finden.

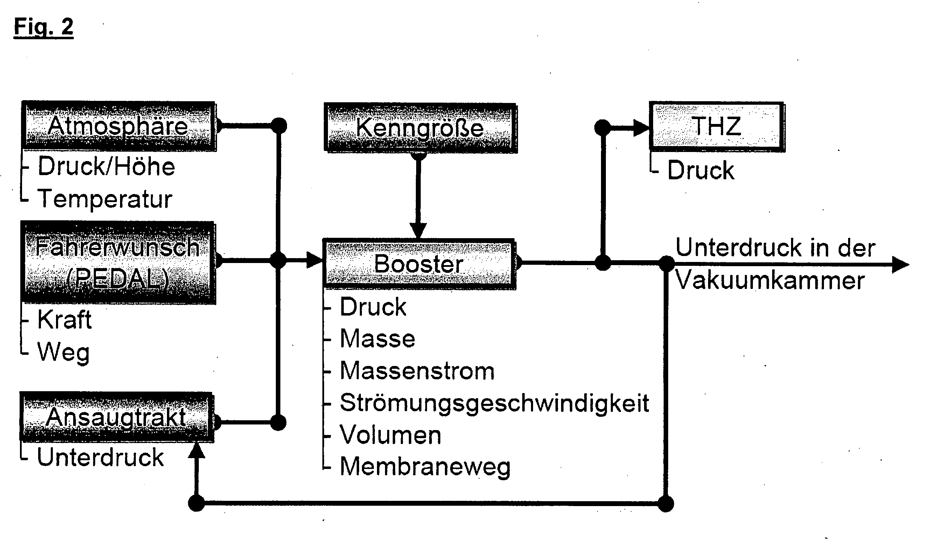

Der Modellbildung liegt ein Strukturbild des Gesamtssystems zu Grunde, das in Fig. 2 dargestellt ist. Dem Prinzip der Bremskraftverstärkung folgend, ist es nahe liegend den Fahrerwunsch mittels der vom Fahrzeugführer am Pedal ausgeübten Kraft oder des Bremspedalweges auszudrücken. Der erfasste Fahrerwunsch ist eine Eingangsgröße des Systems. Weitere Eingangsgröße sind der Unterdruck im Ansaugtrakt bzw. am Unterdruckanschluss 10, der Atmosphärendruck oder die Höhe über dem Nullniveau und die Umgebungstemperatur.

Die Kenngröße der Kammern 2, 3 und der Ventile fließen in die Formulierung des Modells als Parameter des Unterdruckbremskraftverstärkers 1 ein. Die im Unterdruckbremskraftverstärker 1 stattfindenden strömungstechnischen Vorgänge werden mit Hilfe der Erhaltungssätze der Masse in einer Kammer 2, 3 und des Impulses entlang einer Strömungslinie erfasst. Letzterer lässt sich aus der Bernoulli-Gleichung herleiten. Die Zustandsgleichung des idealen Gases bildet die Grundlage für die Beschreibung von thermodynamischen Vorgängen. Die Einbeziehung des ersten und/oder zweiten Hauptsatzes der Thermodynamik bietet die Möglichkeit einer genauen Beschreibung der Zustandsänderungen in den Kammern 2, 3 des Bremskraftverstärkers 1. Die berücksichtigten Zustände des Bremskraftverstärkers 1 sind Fig. 2 entnehmbar.

Der Unterdruck in der Unterdruckkammer 3 wird als Ausgangsgröße gewählt. Diese Ausgangsgröße wird an den Systemeingang, nämlich an den Ansaugtrakt zurückgeführt. Die Voraussetzung hierfür ist, dass ein Rückschlagventil im Ansaugtrakt eingebaut ist. Eine weitere Ausgangsgröße ist der hydraulische Druck im Hauptbremszylinder 8.

Zur Unterstützung der Modellbildung wird ein Versuchfahrzeug mit allen notwendigen Sensoren zur Messung der Fig. 2 erwähnten Eingangs-, Zustands- und Ausgangsgrößen ausgestattet. Diese Sensoren werden mit einer Messtechnik verbunden, die der Speicherung der aufgenommenen Werte dient.

Für die Analyse des statischen und dynamischen Verhaltens des Gesamtssystems, werden Kennfelder verwendet, um kausale Zusammenhänge abzubilden. Des Weiteren wird das gewonnene Modell des Gesamtsystems in ein Simulationstool implementiert und simuliert. Abschließend wird das nicht lineare Modell linearisiert, um das Übertragungsverhalten zwischen den Eingängen und den Ausgängen des Systems zu identifizieren.

Da es sich bei der durchgeführten Analyse hauptsächlich um die Erkennung von Merkmalen bzw. um die experimentelle Bestimmung von Funktionalen zwischen den Zuständen des Gesamtsystems handelt, die eine betriebssichere Funktion des in der Unterdruckkammer 3 eingesetzten Drucksensors 6 gewährleisten, wird das typische Verhalten des Unterdrucks in der Unterdruckkammer 3 bei unterschiedlichen Betriebszuständen in dieser Erläuterung gezeigt. Die Werte des Unterdruckes bezogen auf den Atmosphärendruck werden während der Fahrversuche mit Hilfe des Drucksensors 6 gemessen.

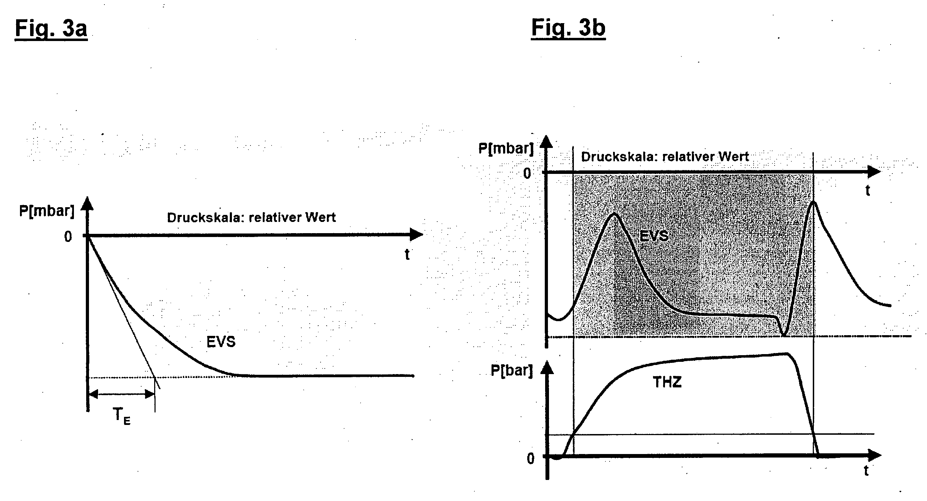

Ausgangspunkt ist die Entlüftung des Bremskraftverstärkers 1 im unbetätigten Zustand. Der Aufbau des Unterdruckes durch eine Unterdruckquelle lässt sich durch ein Verzögerungssystem erster Ordnung, wie es in Fig. 3a dargestellt ist, darstellen. Hierbei wird die Totzeit bis zum Öffnen des Rückschlagventils vernachlässigt. Das Verzögerungssystem erster Ordnung wird mittels zwei Parameter beschrieben, nämlich die Zeitkonstante T_{E} und der Übertragungsfaktor K_{E}, der im stationären Zustand das Verhältnis der Ausgangs- zur Eingangsamplitude darstellt.

Zu Beginn einer Bremsung, d.h. zu Beginn einer Betätigung des Unterdruckbremskraftverstärkers 1 kann die Belüftung genauso durch ein Verzögerungssystem erster Ordnung, wie es in Fig. 3b gezeigt ist, dargestellt werden. Seine Parameter sind die Zeitkonstante T_{B} und der Übertragungsfaktor K_{B}. Im weiteren Verlauf der Bremsung und bis zum Pedallösen oszilliert der Druckverlauf in der Unterdruckkammer 3. Diese kurzeitigen Oszillationen entstehen nach dem Pedallösen zum Teil einerseits durch eine sprunghafte Volumenzunahme der Unterdruckkammer 3, welche zur sprunghaften Druckabnahme in der Unterdruckkammer 3 führt. Andererseits wird gleichzeitig das Tellerventil zur Belüftung der Arbeitskammer 2 geschlossen und das Ventil zwischen der Arbeits- und Unterdruckkammer 2, 3 geöffnet, was ein erneutes Ansteigen des Druckes in der Unterdruckkammer 3 zur Folge hat bis ein Ausgleich zwischen den beiden Kammern 2, 3 erzielt ist.

Der Grundlage zur Durchführung der experimentellen Analyse und der Darstellung aus Fig. 2 entsprechend, müssen mehrere Sensoren im Versuchfahrzeug eingesetzt werden, die allerdings nicht bei allen Bremssystemen bzw. Fahrzeugen vorhanden sind.

Trotz deutlich geprägter Kausalität zum Verhalten des Bremskraftverstärkers 1 wird die Mehrheit der messbaren Größen wegen geringerer Verfügbarkeit nicht als Eingangsgröße für den Algorithmus zur Schätzung der Zustände des Bremskraftverstärkers 1 gewählt. Vielmehr wird bei dem vorliegenden Verfahren eine Ersatzgröße definiert, womit die Schätzung des Druckes in allen Kammern 2, 3 des Bremskraftverstärkers 1 zu bewältigen ist.

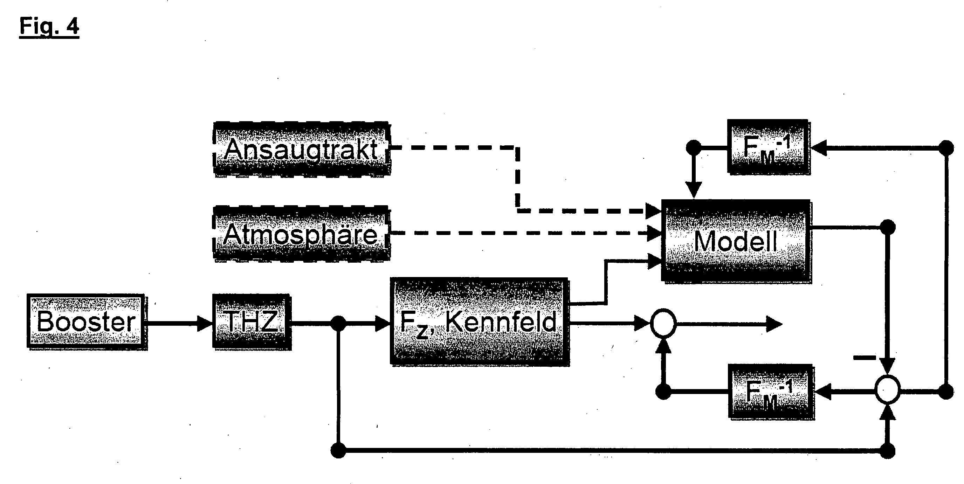

Bei dem vorliegenden Verfahren wird lediglich eine Messgröße für die Auslegung einer Methode zur Schätzung von Zustandsgrößen des Bremskraftverstärkers 1 berücksichtigt. Dies ist der hydraulische Druck im Hauptbremszylinder 8. Je nach Bedarf können die Eingangsgrößen wie der Druck oder Unterdruck im Ansaugtrakt, die Höhe über N.N. oder der atmosphärische Druck sukzessiv in den Algorithmus einbezogen werden. Entscheidend für die Auswahl des Drucks des Hauptbremszylinders 8 als Eingangsgröße im Algorithmus zur Schätzung ist die Absicht, das Verhalten des Bremskraftverstärkers 1 vorzuschreiben anstatt es nur zu beschreiben. Fig. 4 zeigt die Struktur zur Umsetzung des resultierenden Schätzalgorithmus.

Der im Hauptbremszylinder gemessene Druck dient vor allem der Bestimmung der Fahrzustände "Bremsen" und "nicht Bremsen" und der Übergänge zwischen diesen Fahrzustände. Als Übergänge sind der Anfang und das Ende der Pedalbetätigung, das Erreichen des Aussteuerpunktes, also der Verstärkungsgrenze des Bremskraftverstärkers 1, und der Anfang des Pedallösen berücksichtigt. Die Bestimmung der Zustände und der genannten Übergänge beruht auf experimentell und empirisch ermittelten Funktionalen F_{Z} zwischen dem Hauptbremszylinderdruck und den zu bestimmenden Zuständen und Übergängen. Das vorliegende Verfahren sorgt dafür, dass der für die Ermittlung des Aussteuerpunktes benötigte Wert des Drucksensors 6 abgesichert ist.

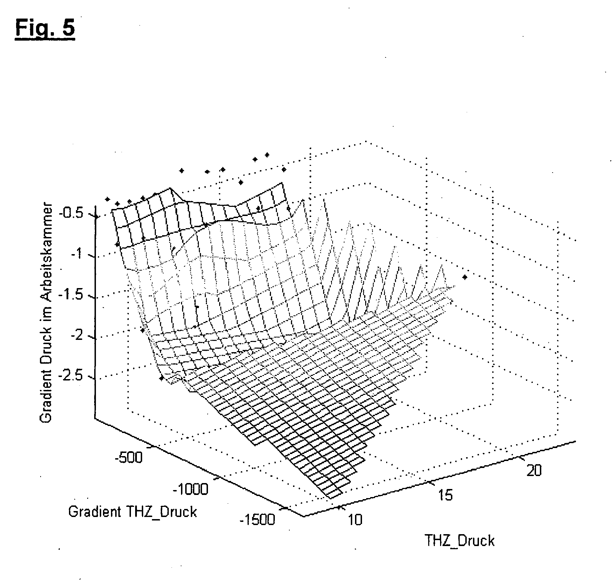

Das eben erwähnte Kennfeld dient der Beschreibung des Verhaltens von Zustandsgrößen in den Kammern 2, 3 des Bremskraftverstärkers 1. Bei dem vorliegenden Verfahren ist eine drei-dimensionale Auslegung des Kennfelds vorgesehen, welches zusätzlich zu einer Eingangsgröße dessen Gradient als weitere Eingangsgröße beinhaltet. Zudem sind die Charakteristika der Ventile auch im Kennfeld enthalten. Als Beispiel ist ein Kennfeld zur Ermittlung des Gradienten des Unterdruckes in der Arbeitskammer 2 in Fig. 5 dargestellt.

Für den ungebremsten Zustand ist der kausale Zusammenhang zwischen dem Druck im Unterdruckversorger und dem Druck im Unterdruckkammer 3 einzig entscheidend. Zudem ist der Druck in der Arbeits- und Unterdruckkammer 2, 3 nach dem Einschwingvorgang identisch.

Bremskraftverstärker 1 werden unter unterschiedlichen atmosphärischen Bedingungen eingesetzt, wie etwa die Höhe über N.N.. Weiterhin können sich wichtige Kenngrößen im Lauf des Betriebs beispielsweise durch Verschleißprozesse ändern. Um diesen atmosphärischen Unterschieden und Änderungen entgegen zu wirken, ist in dem vorliegenden Verfahren ein so genannter adaptiver Algorithmus vorgesehen. Die Adaption oder Anpassung verwendeter Parameter wird so gestaltet, dass sie auch im Fahrzeugbetrieb durchgeführt werden. Dafür werden die zur Generierung der Parameter des Algorithmus, oder dessen Anpassung an die Änderungen erforderlichen Daten in einem nicht-flüchtigen Speicher gesammelt und beispielsweise bei der Fahrzeuginspektion adaptiert.

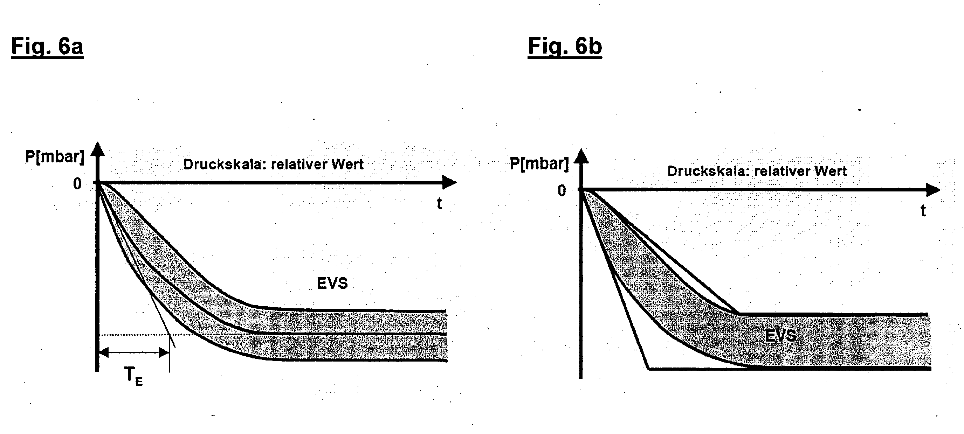

In Fig. 6a ist eine Änderung des Unterdruckes infolge einer Parametervariation dargestellt. Dies zeigt, dass das dynamische Verhalten sich soweit ändern kann, dass sie durch ein Verzögerungssystem bzw. eine Differentialgleichung zweiter Ordnung beschrieben werden kann. Bei dem vorliegenden Verfahren wird die Grenze dieses Streuungsbereiches nicht mit den zugehörigen Differentialgleichungen beschrieben, sondern sie werden mit Hilfe von algebraischen Gleichungen gleicher Ordnung geschätzt, wie es in Fig. 6b dargestellt ist.

Dieser Streuungsbereich wird durch die vom Sensorhersteller vorgegebene Toleranz erweitert. Darüber hinaus wird der maximal erzielbar Unterdruck im stationären Zustand durch den maximal verfügbar natürlichen/physikalischen Unterdruck begrenzt.

Die geschätzten Druckwerte in den beiden Kammern 2, 3 des Bremskraftverstärkers 1 werden einerseits zur Berechnung der geschätzten Druckdifferenz zwischen den beiden Kammern 2, 3 und andererseits zur Plausibilisierung des vom einzelnen Drucksensor 6 ausgegebenen Druckwerts herangezogen.

Für die Plausibilisierung des vom Drucksensor 6 ausgegebenen Druckwerts wird dieser Druckwert mit dem vergleichbaren geschätzten Druckwert verglichen. Anschließend wird in Abhängigkeit von vorbestimmten Toleranzen oder Schwellwerten ein fehlerfreier oder ein fehlerhafter Betrieb des Drucksensors 6 und/oder des Bremskraftverstärkers 1 erkannt. Die Toleranzwerte setzen sich aus einzelnen Toleranzwerten für die Schätzung, für den Drucksensor 6 und für den Erkennungsalgorithmus zusammen.

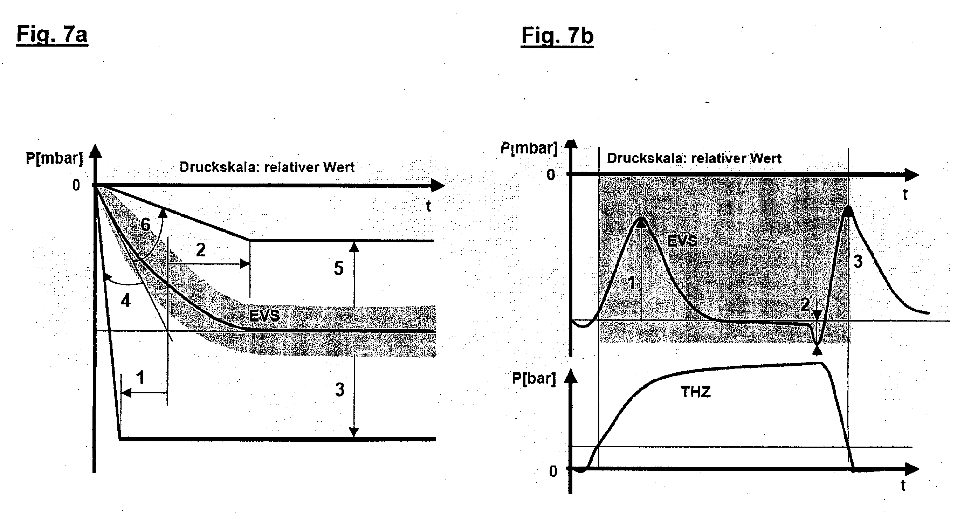

Der Schätzalgorithmus setzt sich aus zwei Hauptteilen zusammen. Der erste Teil wird im Zusammenhang mit Fig. 7a erläutert. Der erste Teil deckt die Betriebszustände nach der Bremsung ab. Die Parameter 31, 32 werden zusammen mit dem Schätzalgorithmus implementiert. Die restlichen Parameter 33, 34, 35, 36 werden ständig an die vorgegebenen Bedingungen angepässt bzw. adaptiert. Der zweite Teil des Schätzalgorithmus wird anhand von Fig. 7b verdeutlicht: Dieser zweite Teil ist für alle Zustände während der Bremsung vorgesehen. Mit Hilfe des zum Gesamtsystem parallel laufenden Modells wird der Unterdruckwert in der Unterdruckkammer 2 präzisiert. Entscheidend bei der Plausibilisierung sind die resultierenden Amplituden der Schwingungen in Abhängigkeit des vom Fahrzeugführer eingesteuerten Drucks im Hauptbremszylinder 8. Ein fehlerfreier Betrieb wird bei allen Zuständen nur bescheinigt, wenn der vom Drucksensor 6 ausgegebenen Druckwerts innerhalb des geschätzten Erwartungsbereichs liegt.

Für die Unterstützung der Fehlerbehebung in der Werkstatt sieht das vorliegende Verfahren eine Methode zur Zuordnung eines Fehlers mit der Fehlerquelle vor. Diese Methode beruht auf der Erkennung von bestimmten Sensor- und/oder Defekten des Bremskraftverstärkers 1 mittels einer hinterlegten Tabelle oder Matrix, welche eine eindeutig umkehrbare Zuordnung von Ursachen oder Fehlern und deren Wirkungen auf den Drucksensor 8 bzw. auf die geschätzten Druckwerte darstellt. Die Tabelle oder die Matrix wird mit Hilfe von Versuchen generiert. Hierfür werden bestimmte Fehlerfälle und Maßnahmen zur Nachstellung von diesen Fehlern während der Versuche definiert. Anschließend werden Versuche durchgeführt, um die Wirkungen auf den Drucksensor 8 und/oder auf den Bremskraftverstärkers 1 mit den Ursachen oder Fehlern zu verbinden.

Aus der beschriebenen Grundlage für die Entwicklung einer Methode zur Schätzung von Zustandsgrößen des Bremskraftverstärkers 1 ist erkennbar, dass diese Grundlage ein großes Potential für einen flexiblen Entwurf einer Methode zur Plausibilisierung des Druckes in den Kammern 2, 3 des Bremskraftverstärkers 1 bietet.

## Patentansprüche

1. Verfahren zum Betrieb eines Unterdruckbremskraftverstärkers (1) einer Fahrzeugbremsanlage, mit einem Gehäuse (5), das durch mindestens eine bewegliche Trennwand (4) in mindestens eine Unterdruckkammer (3) und mindestens eine Arbeitskammer (2) unterteilt ist, wobei die Unterdruckkammer (3) über einen Unterdruckanschluss (10) an eine Unterdruckquelle angeschlossen ist und wobei der Unterdruckkammer (3) eine Sensoreinheit (6) zugeordnet ist, die den Druck in der Unterdruckkammer (3) sensiert und einer elektronischen Steuereinheit (11) zuführt, die eine Auswerteeinheit zur Auswertung der sensierten Drücke in der Unterdruckkammer (3) aufweist und den Aussteuerpunkt des Unterdruckbremskraftverstärkers (1) allein auf Grundlage des in der Unterdruckkammer (3) herrschenden Drucks berechnet, wobei eine Plausibilisierung des von der Sensoreinheit (6) gemessenen Druckwerts durchgeführt wird und mögliche Defekte der Sensoreinheit (6) oder des Unterdruckbremskraftverstärkers (1) ermittelt werden, **dadurch gekennzeichnet, dass** zur Plausibilisierung ein Modell gebildet wird, das auf Grundlage empirisch ermittelter Daten in Verbindung mit strömungstechnischen und thermodynamischen Vorgängen die Zustandsgrößen in der Unterdruckkammer (3) und der Arbeitskammer (2) schätzt.

2. Verfahren nach Anspruch 2, **dadurch gekennzeichnet, dass** die geometrischen Abmessungen der Unterdruckkammer (3) und der Arbeitskammer (2) sowie Umgebungsbedingungen des Unterdruckbremskraftverstärkers (1) in die Modellbildung einbezogen werden.

3. Verfahren nach Anspruch 2, **dadurch gekennzeichnet, dass** die Umgebungsbedingungen des Unterdruckbremskraftverstärkers (1) durch den atmosphärischen Druck, den Druckwert der Unterdruckquelle, den hydraulischen Druck eines nachgeschalteten Hauptbremszylinders (8) und der Umgebungstemperatur gebildet werden.

4. Verfahren nach einem der vorhergehenden Ansprüche 2 bis 4, **dadurch gekennzeichnet, dass** bei der Modellbildung sowohl statische als auch dynamische Betriebszustände des Unterdruckbremskraftverstärkers (1) berücksichtigt werden.

5. Verfahren nach einem der vorhergehenden Ansprüche, **dadurch gekennzeichnet, dass** die elektronische Steuereinheit (11) eine Ansteuerungseinheit aufweist, die eine aktive hydraulische Bremskraftunterstützungseinheit auf Grundlage der Auswertung der Druckwerte in der Unterdruckkammer (3) ansteuert.

6. Unterdruckbremskraftverstärkers (1) einer Fahrzeugbremsanlage, mit einem Gehäuse (5), das durch mindestens eine bewegliche Trennwand (4) in mindestens eine Unterdruckkammer (3) und mindestens eine Arbeitskammer unterteilt ist, wobei die Unterdruckkammer (3) über einen Unterdruckanschluss (10) an eine Unterdruckquelle angeschlossen ist und wobei der Unterdruckkammer (3) eine Sensoreinheit (6) zugeordnet ist, die den Druck in der Unterdruckkammer (3) sensiert und einer elektronischen Steuereinheit (11) zuführt, die eine Auswerteeinheit zur Auswertung der sensierten Drücke in der Unterdruckkammer (3) aufweist und den Aussteuerpunkt des Unterdruckbremskraftverstärkers (1) allein auf Grundlage des in der Unterdruckkammer (3) herrschenden Drucks berechnet, wobei Mittel vorgesehen sind, die eine Plausibilisierung des von der Sensoreinheit (6) gemessenen Druckwerts durchführen und mögliche Defekte der Sensoreinheit (6) oder des Unterdruckbremskraftverstärkers (1) ermitteln, **dadurch gekennzeichnet, dass** die Mittel ein Modell umfassen, das auf Grundlage empirisch ermittelter Daten in Verbindung mit strömungstechnischen und thermodynamischen Vorgängen die Zustandsgrößen in der Unterdruckkammer (3) und der Arbeitskammer (2) schätzt.

## Claims

1. Method for operating a vacuum brake booster (1) of a vehicle brake system, having a housing (5) which is divided into at least one vacuum chamber (3) and at least one working chamber (2) by at least one movable dividing wall (4), wherein the vacuum chamber (3) is connected to a vacuum source via a vacuum port (10), and wherein the vacuum chamber (3) is assigned a sensor unit (6) which senses the pressure in the vacuum chamber (3) and feeds it to an electronic control unit (11) which has an evaluation unit for evaluating the sensed pressures in the vacuum chamber (3) and calculates the modulation point of the vacuum brake booster (1) solely on the basis of the pressure prevailing in the vacuum chamber (3), wherein plausibility checking of the pressure value measured by the sensor unit (6) is carried out and possible defects in the sensor unit (6) or the vacuum brake booster (1) are determined, **characterized in that** in order to perform plausibility checking a model is formed which estimates the state variables in the vacuum chamber (3) and the working chamber (2) on the basis of empirically determined data in conjunction with fluidic and thermodynamic processes.

2. Method according to Claim 2 **characterized in that** the geometric dimensions of the vacuum chamber (3) and of the working chamber (2) as well as ambient conditions of the vacuum brake booster (1) are included in the model formation.

3. Method according to Claim 2, **characterized in that** the ambient conditions of the vacuum brake booster (1) are formed by atmospheric pressure, the pressure value of the vacuum source, the hydraulic pressure of a downstream master brake cylinder (8) and the ambient temperature.

4. Method according to one of the preceding Claims 2 to 4, **characterized in that** both static and dynamic operating states of the vacuum brake booster (1) are taken into account in the model formation.

5. Method according to one of the preceding claims, **characterized in that** the electronic control unit (11) has an actuation unit which actuates an active hydraulic brake booster unit on the basis of the evaluation of the pressure values in the vacuum chamber (3).

6. Vacuum brake booster (1) of a vehicle brake system, having a housing (5) which is divided into at least one vacuum chamber (3) and at least one working chamber (2) by at least one movable dividing wall (4), wherein the vacuum chamber (3) is connected to a vacuum source via a vacuum port (10), and wherein the vacuum chamber (3) is assigned a sensor unit (6) which senses the pressure in the vacuum chamber (3) and feeds it to an electronic control unit (11) which has an evaluation unit for evaluating the sensed pressures in the vacuum chamber (3) and calculates the modulation point of the vacuum brake booster (1) solely on the basis of the pressure prevailing in the vacuum chamber (3), wherein means are provided which carry out plausibility checking of the pressure value measured by the sensor unit (6) and determine possible defects in the sensor unit (6) or of the vacuum brake booster (1), **characterized in that** the means comprise a model which estimates the state variables in the vacuum chamber (3) and the working chamber (2) on the basis of empirically determined data in conjunction with fluidic and thermodynamic processes.

## Revendications

1. Procédé de fonctionnement d'un amplificateur de mesure de force de freinage à dépression (1) d'un équipement de freinage de véhicule, comprenant un boîtier (5) qui est divisé par au moins une cloison de séparation mobile (4) en au moins une chambre de dépression (3) et au moins une chambre de travail (2), la chambre de dépression (3) étant raccordée à une source de dépression par le biais d'un raccord de dépression (10) et une unité de détection (6) étant associée à la chambre de dépression (3), laquelle détecte la pression dans la chambre de dépression (3) et l'achemine à une unité de commande électronique (11) qui présente une unité d'interprétation pour interpréter les pressions détectées dans la chambre de dépression (3) et calcule le point de réglage maximum de l'amplificateur de mesure de force de freinage à dépression (1) uniquement en se basant sur la pression qui règne dans la chambre de dépression (3), un calcul de la plausibilité de la valeur de pression mesurée par l'unité de détection (6) étant effectué et les défauts possibles de l'unité de détection (6) ou de l'amplificateur de mesure de force de freinage à dépression (1) étant déterminés, **caractérisé en ce qu'**un modèle est formé pour le calcul de la plausibilité, lequel évalue les grandeurs d'état dans la chambre de dépression (3) et la chambre de travail (2) en se basant sur des données déterminées empiriquement en relation avec des phénomènes fluidiques et thermodynamiques.

2. Procédé selon la revendication 2, **caractérisé en ce que** les dimensions géométriques de la chambre de dépression (3) et de la chambre de travail (2) ainsi que les conditions environnantes de l'amplificateur de mesure de force de freinage à dépression (1) interviennent dans la formation du modèle.

3. Procédé selon la revendication 2, **caractérisé en ce que** les conditions environnantes de l'amplificateur de mesure de force de freinage à dépression (1) sont formées par la pression atmosphérique, la valeur de la pression de la source de dépression, la pression hydraulique d'un maître-cylindre de frein (8) branché en aval et la température ambiante.

4. Procédé selon l'une des revendications précédentes 2 à 4, **caractérisé en ce que** les états opérationnels à la fois statiques et dynamiques de l'amplificateur de mesure de force de freinage à dépression (1) sont pris en compte lors de la formation du modèle.

5. Procédé selon l'une des revendications précédentes, **caractérisé en ce que** l'unité de commande électronique (11) présente une unité de commande qui commande une unité d'assistance hydraulique de la force de freinage en se basant sur l'interprétation des valeurs de la pression dans la chambre de dépression (3).

6. Amplificateur de mesure de force de freinage à dépression (1) d'un équipement de freinage de véhicule, comprenant un boîtier (5) qui est divisé par au moins une cloison de séparation mobile (4) en au moins une chambre de dépression (3) et au moins une chambre de travail (2), la chambre de dépression (3) étant raccordée à une source de dépression par le biais d'un raccord de dépression (10) et une unité de détection (6) étant associée à la chambre de dépression (3), laquelle détecte la pression dans la chambre de dépression (3) et l'achemine à une unité de commande électronique (11) qui présente une unité d'interprétation pour interpréter les pressions détectées dans la chambre de dépression (3) et calcule le point de réglage maximum de l'amplificateur de mesure de force de freinage à dépression (1) uniquement en se basant sur la pression qui règne dans la chambre de dépression (3), des moyens étant prévus qui effectuent un calcul de la plausibilité de la valeur de pression mesurée par l'unité de détection (6) et déterminent les défauts possibles de l'unité de détection (6) ou de l'amplificateur de mesure de force de freinage à dépression (1), **caractérisé en ce que** les moyens comprennent un modèle qui évalue les grandeurs d'état dans la chambre de dépression (3) et la chambre de travail (2) en se basant sur des données déterminées empiriquement en relation avec des phénomènes fluidiques et thermodynamiques.
